(19) Europäisches Patentamt
European Patent Office
Office européen des brevets

(11) **EP 2 636 520 A1**

(12) **EUROPÄISCHE PATENTANMELDUNG**

(43) Veröffentlichungstag:
**11.09.2013 Patentblatt 2013/37**

(21) Anmeldenummer: 13156773.7

(22) Anmeldetag: **26.02.2013**

(51) Int Cl.:
*B32B 5/18* (2006.01) *B32B 27/06* (2006.01)
*B32B 27/08* (2006.01) *B32B 27/32* (2006.01)
*B32B 1/08* (2006.01) *F16L 59/14* (2006.01)
*F24D 10/00* (2006.01) *F16L 59/10* (2006.01)
*F16L 59/153* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **06.03.2012 DE 102012101869**

(71) Anmelder: **REHAU AG + Co**
**95111 Rehau (DE)**

(72) Erfinder: **Kania, Guido**
**91080 Marloffstein (DE)**

(54) **Verwendung eines Polymermaterials**

(57) Die vorliegende Erfindung betrifft die Verwendung eines Polymermaterials, welches ein unvernetztes Polyolefin ist und bei einer Innendruckprüfung gemäß ISO 1167-1 und ISO 1167-2 eine Innendruckfestigkeit aufweist, die auf oder über einer Referenzkurve im Temperaturbereich von 10 bis 110 °C liegt, die folgender Definition entspricht:

$$\lg t = -219 - (62600{,}752 \times \lg \text{sigma}) / T + 90635{,}353 / T + 126{,}387 \times \lg \text{sigma}$$

wobei t für die Zeit in h, T für die Temperatur in K und sigma für die hydrostatische Spannung in MPa steht, zur Herstellung mindestens einer Wärmedämmschicht (4) eines mehrschichtigen Rohres (1) oder mindestens einer Wärmedämmschicht (4) eines mehrschichtigen Rohrformteils (1', 1", 1''') für eine Rohranordnung eines Fernwärmenetzes.

Fig. 1

EP 2 636 520 A1

**Beschreibung**

Die Erfindung betrifft die Verwendung eines Polymermaterials zur Herstellung einer Wärmedämmschicht eines mehrschichtigen Rohres oder einer Wärmedämmschicht eines mehrschichtigen Rohrformteils, weiterhin ein Verfahren zur Herstellung eines mehrschichtigen Rohres oder eines mehrschichtigen Formteils und das nach dem Verfahren hergestellte mehrschichtige Rohr oder mehrschichtige Rohrformteil.

Die Versorgung von Wohnungen und Gebäuden mit Wärmeenergie zu Heizzwecken, die mit Hilfe von so genannten Fernwärmenetzen ausgeführt wird, ist eine günstige und effiziente Technik, Wärme von dem Ort der Erzeugung zu den einzelnen Verbrauchern zu leiten.

Hierzu werden so genannte Fernwärmerohre eingesetzt, die in der Lage sind, das in den Rohren strömende erhitzte Fluid über sehr lange Wegstrecken zu den Verbrauchern zu leiten, ohne dass es zu erheblichen Wärmeenergieverlusten kommt.

Zu diesem Zweck sind die Rohre wärmegedämmt.

Für das eigentliche medienführende Rohr sind aus dem Stand der Technik solche aus vernetztem Polyethylen (PE-X) oder aus Stahl bekannt.

Eine sehr gängige Technik, solche Fernwärmerohre herzustellen ist die, ein Mediumrohr beispielsweise aus PE-X mit einer oder mehreren Schaumlagen aus einem expandierten Polymermaterial wie beispielsweise PE-X oder Polyethylen (PE) oder Polypropylen (PP) oder Polyurethan (PUR), welche die Dämmung bilden, herzustellen.

Ein solches konfektioniertes Paket aus Mediumrohr und Schaumlagen wird anschließend in ein vorgefertigtes flexibles Wellrohr eingezogen. Zur Verbindung dieser Fernwärmerohre untereinander sind Rohrformteile erforderlich, ebenso um beispielsweise Abzweige und Seitenanschlüsse herzustellen.

Derartige aus dem Stand der Technik bekannte Fernwärmerohre sind aufwendig herzustellen, wegen der vielen durchzuführenden Verfahrensschritte fehleranfällig und hinsichtlich der Materialauswahl bei der Wärmedämmschicht eingeschränkt.

Hier setzt die Erfindung ein, die es sich zur Aufgabe gemacht hat, ein geeignetes Polymermaterial, welches die hohen Anforderungen, die an Fernwärmerohre gestellt werden, erfüllt, auszuwählen und für die Herstellung einer Wärmedämmschicht für eine Rohranordnung eines Fernwärmenetzes vorzusehen. Darüber hinaus soll das Polymermaterial in einfacher Weise formbar sein, um so das Rohr oder Rohrformteil in einer einfachen Herstellungstechnik bereitstellen zu können.

Die Aufgabe wird erfindungsgemäß dadurch gelöst und die aus dem Stand der Technik bekannten Nachteile dadurch überwunden, dass ein Polymermaterial verwendet wird, welches ein unvernetztes Polyolefin ist und bei einer Innendruckprüfung gemäß ISO 1167-1 und ISO 1167-2 eine Innendruckfestigkeit aufweist, die auf oder über einer Referenzkurve im Temperaturbereich von 10 bis 110 °C liegt, die folgender Definition entspricht:

$$\lg t = -219 - (62600{,}752 \times \lg sigma) / T + 90635{,}353 / T + 126{,}387 \times \lg sigma$$

wobei t für die Zeit in Stunden (h), T für die Temperatur in Kelvin (K) und sigma für die hydrostatische Spannung in Megapascal (MPa) steht, um daraus mindestens eine Wärmedämmschicht eines mehrschichtigen Rohres oder mindestens eine Wärmedämmschicht eines mehrschichtigen Rohrformteils für eine Rohranordnung eines Fernwärmenetzes herzustellen.

Wobei sich an folgenden Bereichen für sigma, t und T orientiert wird:

- sigma (Spannung) ist 1 MPa bis 20 MPa,
- t (Zeit) von 0,1 h bis 1.000.000 h (ca. 100 Jahre),
- T von 0°C (273,15 K) bis 110°C (383,15 K).

Durch die erfindungsgemäße Verwendung eines Polymermaterials gemäß vorstehend beschriebener Definition gelingt es, ein mehrschichtiges Rohr oder ein mehrschichtiges Rohrformteil mit jeweils mindestens einer Wärmedämmschicht aus besagtem Polymermaterial für eine Rohranordnung eines Fernwärmenetzes bereitzustellen.

Ein derartiges Rohr oder ein derartiges Rohrformteil mit einer Wärmedämmschicht gemäß vorliegender Erfindung lässt sich in einfacher Art und Weise herstellen, verursacht geringe Herstellkosten, ist dauerhaft, widersteht über lange Zeiträume den herrschenden Drücken und Temperaturen des in ihnen geförderten Mediums und ist dauerhaft in Bezug auf die Wirksamkeit der Wämedämmung.

Insbesondere widersteht ein solches Rohr oder Rohrformteil den Bedingungen, unter denen ein Fernwärmenetz betrieben wird. Dazu gehören die dauerhafte von Temperatur und etwaigen Druckschwankungen des Fluids auf die Wärmedämmschicht aus Polymermaterial, weiterhin Druckspitzen und -schwankungen sowie Temperaturspitzen und -schwankungen. Ebenso ist das Ausdehnungsverhalten des Materials zu berücksichtigen, was entscheidend von Temperatur und Druck mit beeinflußt wird. Schließlich ist ein dauerhafter Werkstoff im Hinblick auf eine langlebige Wärmedämmung gefragt, da ein Fernwärmenetz eine lange Lebensdauer aufweisen soll.

All dies wird durch die Verwendung des vorstehend beschriebenen Polymermaterials sichergestellt.

Es hat sich im Rahmen der vorliegenden Erfindung als günstig herausgestellt, wenn das Polymermaterial ein Polyethylen ist.

Ein Polyethylen ist ein sehr einfach verarbeitbares Polymermaterial, das sowohl in Extrusions- wie auch im Spritzgussverfahren einsetzbar ist, um damit eine Wärmedämmschicht herzustellen.

Ein Polyethylen ist inert, langlebig und wird von der Temperatur des zu leitenden Fluids bei einer Anwendung in einem Fernwärmenetz nicht geschädigt oder verändert, darüber hinaus ist es günstig verfügbar.

Es hat sich im Rahmen der Erfindung als sehr vorteilhaft erwiesen, wenn die innerste, d.h. die dem Lumen des Rohres oder Rohrformteiles zugewandte Schicht des Medienrohres aus einem Polymermaterial, wie beispielsweise Polyethylen (PE), vernetzten Polyethylen (PE-X), Polypropylen (PP), Polybutylen (PB), deren Mischungen oder Copolymerisate, gebildet ist.

Das Medienrohr kann daher aus Polymermaterial bestehen oder Polymermaterial enthalten.

In einer anderen Ausgestaltung der Erfindung kann auch vorgesehen sein, dass das Medien aus Metall hergestellt ist.

Diese innerste Schicht des Rohres oder Rohrformteils kommt mit dem zu leitenden Medium in Berührung.

Im Rahmen der Erfindung hat es sich weiterhin als günstig erwiesen, wenn an der - auf der vom Lumen abgewandten Seite - oder in der Schicht aus Polymermaterial wenigstens eine Sperrschicht angeordnet ist.

Eine solche Sperrschicht verhindert oder reduziert im ganz hohen Maße den Durchtritt von Stoffen aus der Umgebung in das Lumen des Rohres bzw. aus dem Lumen des Rohres in die Umgebung.

Es hat sich als besonders günstig erwiesen, wenn als Sperrschicht eine Sperrschicht verwendet wird, die den Durchtritt von Wasserdampf verhindert bzw. begrenzt und / oder den Durchtritt von Sauerstoff.

Im Rahmen der Erfindung kann auch vorgesehen sein, dass mehrere Sperrschichten in einer Kombination vorgesehen sind.

Im Rahmen der Erfindung hat sich weiterhin als vorteilhaft herausgestellt, wenn an der Schicht aus Polymermaterial oder an der Sperrschicht eine Wärmedämmschicht angeordnet ist.

Diese Wärmedämmschicht enthält oder besteht erfindungsgemäß aus einem Polymerschaummaterial, wobei das Polymer ein unvernetztes Polyolefin ist und bei einer Innendruckprüfung gemäß ISO 1167-1 und ISO 1167-2 eine Innendruckfestigkeit aufweist, die auf oder über einer Referenzkurve im Temperaturbereich von 10 bis 110 °C liegt, die folgender Definition entspricht:

$$\lg t = -219 - (62600{,}752 \times \lg sigma) / T + 90635{,}353 / T + 126{,}387 \times \lg sigma$$

wobei t für die Zeit in Stunden (h), T für die Temperatur in Kelvin (K) und sigma für die hydrostatische Spannung in Megapascal (MPa) steht.

Hierbei wird sich an folgenden Bereichen für sigma, t und T orientiert:

- sigma (Spannung) ist 1 MPa bis 20 MPa,
- t (Zeit) von 0,1 h bis 1.000.000 h (ca. 100 Jahre),
- T von 0°C (273,15 K) bis 110°C (383,15 K).

Das Polymermaterial ist mit einem Gas physikalisch oder chemisch aufgeschäumt.

Der derart erzeugte Polymerschaum kann offenzellig oder geschlossenzellig sein. Bevorzugt ist ein geschlossenzelliger Polymerschaum, da dieser Vorteile hinsichtlich seiner Wärmedämmeigenschaften und einer möglichen Wasseraufnahme aufweist.

Die Wärmedämmschicht kann mehrlagig ausgeführt sein.

Es sind auch mehrschichtige Aufbauten, die weiterhin auch alternative Dämmschichtmaterialien, wie z.B. Aerogel, enthalten, herstellbar.

Das Material der Wärmedämmschicht ist erfindungsgemäß derart gewählt, das gegenüber der Temperatur des zu leitenden Mediums kein Versagen, keinen Abbau oder ähnlichen Änderungen zeigt. Die Dicke der Wärmedämmschicht wird so gewählt, dass der gewünschte Wärmedämmeffekt eintritt.

In einer bevorzugten Weiterentwicklung der vorliegenden Erfindung ist vorgesehen, dass an der vom Lumen des Rohres oder Rohrformteils abgewandten Seite der Wärmedämmschicht eine Diffusionssperrschicht angeordnet ist.

Eine dort an der Wärmedämmschicht angeordnete Diffusionssperrschicht ist geeignet, die Wärmedämmschicht vor dem Eindringen von Stoffen aus der Umwelt zu bewahren. Weiterhin kann die Diffusionssperrschicht auch verhindern, dass Stoffe aus der Wärmedämmschicht in die Umwelt gelangen.

Insbesondere kann auch vorgesehen sein, dass die Diffusionssperrschicht so ausgelegt ist, dass Gase aus dem Polymerschaum, welcher die Wärmedämmschicht bildet, nicht nach außen in die Umwelt diffundieren, sondern in der Wärmedämmschicht verbleiben und dadurch die Wirksamkeit der Wärmedämmschicht aufrechterhalten.

Im Rahmen der vorliegenden Erfindung kann weiterhin vorteilhaft vorgesehen sein, dass eine Schutzschicht angeordnet ist, die die äußerste Schicht des Rohres oder Rohrformteils bildet.

Durch das Vorsehen einer Schutzschicht, die die äußerste Schicht des Rohres oder Rohrformteils bildet, kann ein sehr widerstandsfähiges Rohr oder Rohrformteil hergestellt werden, das eine hohe Widerstandskraft gegen Beschädigungen beim Lagern, Transportieren und Einbauen der Rohre oder Rohrformteile gewährleistet.

Im Rahmen einer günstigen Weiterbildung der Erfindung kann die Schutzschicht gewellt oder glatt ausgeführt sein, weiterhin kann vorgesehen sein, dass die Schutzschicht aus einem Polyethylen (PE) oder einem Polyethylen mit erhöhter Spannungsrissbeständigkeit oder einem vernetzten Polyethylen (PE-X) oder aus ähnlichen widerstandsfähigen Materialien hergestellt ist.

Es kann sich bei der vorliegenden Erfindung als günstig erweisen, wenn wenigstens eine Haftvermittlerschicht zwischen zweien den vorstehend genannten Schichten angeordnet ist. Eine Haftvermittlerschicht bewirkt einen besonders festen Verbund zwischen zwei aneinander grenzende Schichten, so dass ein Haftverbund entsteht. Es ist in der Erfindung auch umfasst, dass zwischen allen aneinander angrenzenden Schichten Haftvermittlerschichten ausgebildet sind.

Die Aufgabe, ein Verfahren zur Herstellung eines mehrschichtigen Rohres oder mehrschichtigen Rohrformteils anzugeben, erfährt ihre Lösung in Anspruch 7.

Erfindungsgemäß wird dazu ein Verfahren zur Herstellung eines mehrschichtigen Rohres oder mehrschichtigen Formteils für eine Rohranordnung eines Fernwärmenetzes vorgeschlagen, wobei mindestens eine Wärmedämmschicht des mehrschichtigen Rohres oder des mehrschichtigen Formteils aus einem Polymermaterial, welches ein unvernetztes Polyolefin ist und bei einer Innendruckprüfung gemäß ISO 1167-1 und ISO 1167-2 eine Innendruckfestigkeit aufweist, die auf oder über einer Referenzkurve im Temperaturbereich von 10 bis 110 °C liegt, die folgender Definition entspricht:

$$\lg t = -219 - (62600{,}752 \times \lg sigma) / T + 90635{,}353 / T + 126{,}387 \times \lg sigma$$

wobei t für die Zeit in Stunden (h), T für die Temperatur in Kelvin (K) und sigma für die hydrostatische Spannung in Megapascal (MPa) steht, geformt wird.

Hierbei wird sich an folgenden Bereichen für sigma, t und T orientiert:

- sigma (Spannung) ist 1 MPa bis 20 MPa,
- t (Zeit) von 0,1 h bis 1.000.000 h (ca. 100 Jahre),
- T von 0°C (273,15 K) bis 110°C (383,15 K).

Ein solches Verfahren zur Herstellung eines mehrschichtigen Rohres oder mehrschichtigen Rohrformteils kann als Extrusionsverfahren oder als Spritzgussverfahren oder als Blasverfahren oder als Inline-Konfektionsverfahren oder als aus den Vorstehenden kombiniertes Verfahren ausgewählt sein.

Mithilfe des Verfahrens lässt sich in günstiger Weise ein mehrschichtiges Rohr oder ein mehrschichtiges Rohrformteil gemäß vorstehender Beschreibung herstellen.

Im Rahmen der Erfindung hat sich als sehr vorteilhaft erwiesen, wenn das Verfahren so ausgeführt wird, dass an oder in der Schicht aus Polymermaterial wenigstens eine Sperrschicht angeordnet wird.

Das Anordnen einer Sperrschicht an oder in der Schicht aus Polymermaterial kann in einfacher Weise in einem Extrusionsprozess bzw. Coextrusionsprozess oder in einem Spritzgussprozess realisiert werden.

Weiterhin hat sich als günstig herausgestellt, wenn im Rahmen des Verfahrens eine Wärmedämmschicht angeordnet und an der vom Lumen des Rohres oder Rohrformteils abgewandten Seite der Wärmedämmschicht eine Diffusionssperrschicht angeordnet wird.

Durch ein entsprechendes Verfahren, bei dem neben der Herstellung der mindestens einen Schicht des mehrschichtigen Rohres oder des mehrschichtigen Formteils aus dem Polymermaterial gemäß vorstehender Beschreibung auch noch eine Wärmedämmschicht und eine an der vom Lumen des Rohres oder Rohrformteils abgewandten Seite der Wärmedämmschicht eine Diffusionssperrschicht angeordnet wird, ist besonders vorteilhaft und günstig.

Auf diese Weise ist ein Rohr oder Rohrformteil mit dem geschilderten komplexen Aufbau seiner Wandung in einem einfachen Herstellverfahren, beispielsweise einem Coextrusionsverfahren oder einem Mehrkomponentenspritzgussverfahren ohne großem Aufwand, in hoher Reproduzierbarkeit und mit einem überragendem Qualitätsniveau zugänglich.

Im Rahmen der vorliegenden Erfindung wird die Aufgabe, ein mehrschichtiges Rohr oder mehrschichtiges Rohrformteil zur Verfügung zu stellen, durch Anspruch 10 gelöst.

Die Aufgabe findet Ihre Lösung darin, dass durch das vorstehend beschriebene Verfahren ein mehrschichtiges Rohr oder mehrschichtiges Rohrformteil in einfacher Art und Weise zugänglich ist.

Als mehrschichtiges Rohrformteil wird im vorstehenden Erfindungszusammenhang beispielsweise ein Rohrbogen, ein Rohrabzweig, ein T-Stück, eine Muffe oder eine Elektroschweißmuffe verstanden, ohne dass diese Aufzählung abschließend ist.

Eine Elektroschweißmuffe ist in besonderer Weise geeignet, Rohre miteinander oder Rohre und Rohrformteile oder Rohrformteile untereinander zu verbinden.

Es versteht sich im Rahmen der vorliegenden Erfindung, dass eine Elektroschweißmuffe so ausbildbar ist, dass diese ein Rohr, zwei Rohre, drei Rohre oder vier Rohre aufnehmen und miteinander oder mit einem oder mehreren Rohrformteilen verbinden kann.

Eine Rohrleitung, bestehend aus Rohren oder Rohrformteilen gemäß vorliegender Erfindung ist besonders vorteilhaft, wenn die Verbindung zwischen den Rohren oder Rohrformteilen mittels Stumpfschweißung hergestellt wird.

Weitere wichtige Merkmale und Vorteile der Erfindung ergeben sich aus den Unteransprüchen, aus den Fig. und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher erläutert, wobei sich gleiche Bezugszeichen auf gleiche oder funktional gleiche Komponenten beziehen.

Die Erfindung wird durch die beigefügten Figuren wie folgt erläutert.

Hierzu zeigt:

Fig. 1      einen Längsschnitt durch ein Rohr entlang der Achse;

Fig. 2      einen Längsschnitt durch einen Rohrbogen entlang der Achse;

Fig. 3      einen Längsschnitt durch ein T-Stück entlang der Achse;

Fig. 4      einen Längsschnitt durch eine Elektroschweißmuffe entlang der Achse.

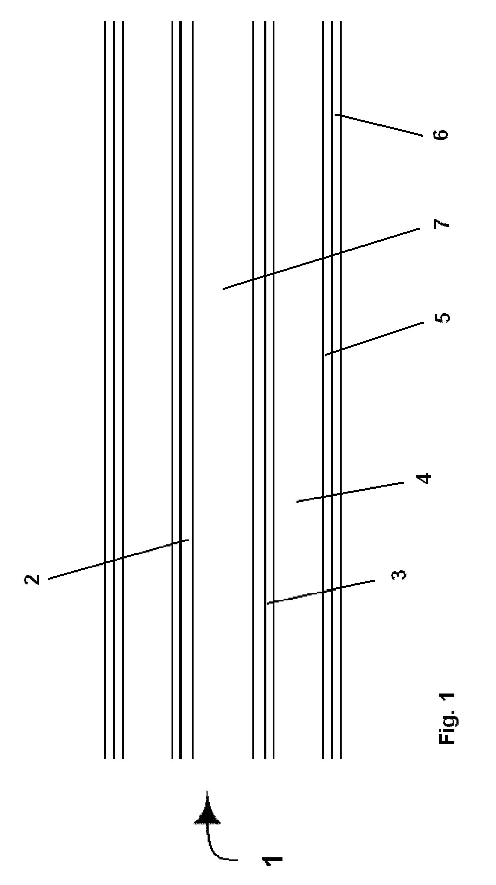

In Fig. 1 ist ein Rohr 1 in einer Längsschnittansicht entlang der Achse gezeigt.

Das mehrschichtige Rohr 1 weist ein Lumen 7 in einem Medienrohr 2 auf, das aus Polymermaterial besteht.

Mit dem Medienrohr 2 fest verbunden ist eine daran angrenzende Sperrschicht 3.

Auf der vom Lumen 7 des mehrschichtigen Rohres 1 abgewandten Seite der Sperrschicht 3 ist eine Wärmedämmschicht 4 angeordnet. Die Wärmedämmschicht 4 besteht aus einem geschäumten Polymermaterial.

Die Wärmedämmschicht 4 weist an ihrer vom Lumen 7 des mehrschichtigen Rohres 1 abgewandten Seite eine Diffusionssperrschicht 5 auf.

Als äußerste Schicht des mehrschichtigen Rohres 1 ist eine Schutzschicht 6 anliegend an der Diffusionssperrschicht 5 angeordnet.

Alle genannten Schichten sind fest miteinander verbunden.

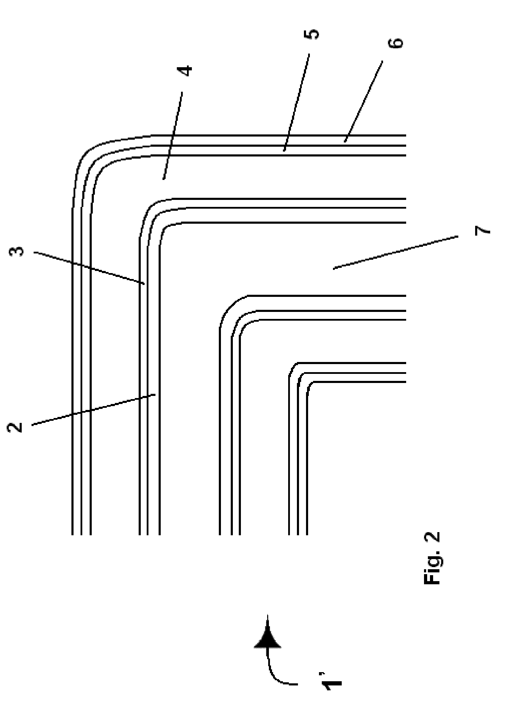

In Fig. 2 ist ein Längsschnitt durch einen mehrschichtigen Rohrbogen 1' entlang seiner Achse gezeigt.

Der mehrschichtige Rohrbogen 1 ist ein Rohrformteil, der eine Verbindung von hier nicht gezeigten Rohren 1, 1 in einem bestimmten Winkel, im vorliegenden Fall etwa 90°, ermöglicht.

Das Lumen 7 des mehrschichtigen Rohrbogens 1'wird, von einer mehrschichtigen Wandung begrenzt, wobei der Aufbau analog ist, wie vorstehend unter Fig. 1 geschildert. Alle Bezugszeichen entsprechen dabei einander.

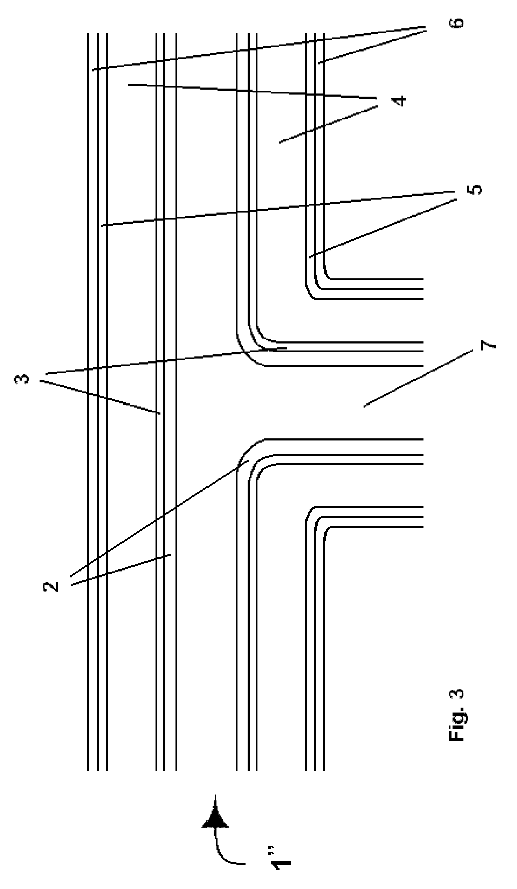

Fig. 3 zeigt ein T-Stück 1" in einer Längsschnittansicht entlang der Achse.

Mit einem T-Stück 1 " ist es möglich, Rohre 1, 1 oder Rohrformteile 1', 1", 1'" miteinander zu verbinden.

Das Lumen 7 des T-Stücks 1" wird von einer mehrschichtigen Wandung begrenzt, deren Aufbau bereits grundsätzlich aus der Beschreibung zu Fig. 1 bekannt ist. Die Bezugszeichen entsprechen dabei einander.

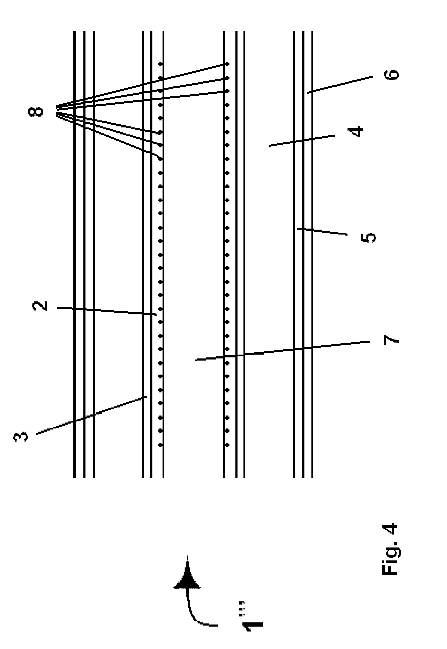

In Fig. 4 ist eine Elektroschweißmuffe 1'" wiedergegeben, die in einer Längsschnittansicht entlang der Achse dargestellt ist.

Eine Elektroschweißmuffe 1'" ist geeignet, Rohre 1, 1 oder Rohrformteile 1', 1", 1'" zu verbinden, wobei der Schweißvorgang durch Anlegen einer elektrischen Spannung eingeleitet wird, wodurch im Inneren der Elektroschweißmuffe 1'" durch einen Heizdraht 8 Polymermaterial aufgeschmolzen wird, das die Schweißverbindung herstellt.

Das Lumen 7 der Elektroschweißmuffe 1''' wird hierbei von einer mehrschichtigen Wandung begrenzt, deren Aufbau in der Beschreibung zur Fig. 1 bereits erläutert wurde. Die Bezugszeichen entsprechen dabei einander.

**Bezugszeichenliste**

| | |
|---|---|
| 1 | Rohr |
| 1' | Rohrbogen |
| 1 " | T-Stück |
| 1''' | Elektroschweißmuffe |
| 2 | Medienrohr |
| 3 | Sperrschicht |
| 4 | Wärmedämmschicht |
| 5 | Diffusionssperrschicht |
| 6 | Schutzschicht |
| 7 | Lumen des Rohres oder Rohrformteils |
| 8 | Heizdrähte |

**Patentansprüche**

1. Verwendung eines Polymermaterials, welches ein unvernetztes Polyolefin ist und bei einer Innendruckprüfung gemäß ISO 1167-1 und ISO 1167-2 eine Innendruckfestigkeit aufweist, die auf oder über einer Referenzkurve im Temperaturbereich von 10 bis 110 °C liegt, die folgender Definition entspricht:

$$\lg t = -219 - (62600{,}752 \times \lg sigma) / T + 90635{,}353 / T + 126{,}387 \times \lg sigma$$

wobei t für die Zeit in h, T für die Temperatur in K und sigma für die hydrostatische Spannung in MPa steht, zur Herstellung mindestens einer Wärmedämmschicht (4) eines mehrschichtigen Rohres (1) oder mindestens einer Wärmedämmschicht (4) eines mehrschichtigen Rohrformteils (1', 1", 1''') für eine Rohranordnung eines Fernwärmenetzes.

2. Verwendung eines Polymermaterials nach Anspruch 1, wobei das Polymermaterial ein Polyethylen ist.

3. Verwendung eines Polymermaterials nach Anspruch 1 oder 2, wobei die Wärmedämmschicht (4) aus Polymermaterial an einem Medienrohr (2) angeordnet ist.

4. Verwendung eines Polymermaterials nach einem der vorangehenden Ansprüche, wobei an oder in der Wärmedämmschicht (4) aus Polymermaterial wenigstens eine Sperrschicht (3) angeordnet ist.

5. Verwendung eines Polymermaterials nach einem der vorangehenden Ansprüche, wobei an der vom Lumen (7) des Rohres (1) oder Rohrformteils (1', 1", 1''') abgewandten Seite der Wärmedämmschicht (4) eine Diffusionssperrschicht (5) angeordnet ist.

6. Verwendung eines Polymermaterials nach einem der vorangehenden Ansprüche, wobei eine Schutzschicht (6), die die äußerste Schicht des Rohres (1) oder Rohrformteils (1', 1", 1''') bildet, angeordnet ist.

7. Verfahren zur Herstellung eines mehrschichtigen Rohres (1) oder mehrschichtigen Rohrformteils (1', 1", 1''') für eine Rohranordnung eines Fernwärmenetzes, wobei mindestens eine Wärmedämmschicht (4) des mehrschichtigen Rohres (1) oder des mehrschichtigen Rohrformteils (1', 1", 1''') aus einem Polymermaterial, welches ein unvernetztes Polyolefin ist und bei einer Innendruckprüfung gemäß ISO 1167-1 und ISO 1167-2 eine Innendruckfestigkeit aufweist, die auf oder über einer Referenzkurve im Temperaturbereich von 10 bis 110 °C liegt, die folgender Definition entspricht:

$$\lg t = -219 - (62600{,}752 \times \lg sigma) / T + 90635{,}353 / T + 126{,}387 \times \lg sigma$$

wobei t für die Zeit in h, T für die Temperatur in K und sigma für die hydrostatische Spannung in MPa steht, geformt wird.

8. Verfahren nach Anspruch 8, wobei an oder in der Wärmedämmschicht (4) aus Polymermaterial wenigstens eine Sperrschicht angeordnet (3) wird.

9. Verfahren nach Anspruch 7 oder 8, wobei an der vom Lumen (7) des Rohres (1) oder Rohrformteils (1', 1", 1''') abgewandten Seite der Wärmedämmschicht (4) eine Diffusionssperrschicht (5) angeordnet wird.

10. Mehrschichtiges Rohr (1) oder mehrschichtiges Rohrformteil (1', 1", 1'''), insbesondere ein Rohrbogen, ein Rohrabzweig, ein T-Stück, eine Muffe oder eine Elektroschweißmuffe, hergestellt nach dem Verfahren nach einem der Ansprüche 7 bis 9.

Fig. 1

Fig. 2

Fig. 3

Fig. 4

Europäisches
Patentamt
European
Patent Office
Office européen
des brevets

**EUROPÄISCHER RECHERCHENBERICHT**

Nummer der Anmeldung

EP 13 15 6773

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | WO 2008/116625 A1 (REHAU AG & CO [DE]; STADTHALTER PETER [DE]) 2. Oktober 2008 (2008-10-02) * Seite 4, Zeile 17 - Zeile 18; Ansprüche 1,2,6-8,11-16,19,20 * * Seite 5, Zeile 1 - Zeile 26; Abbildungen 1-3 * ----- | 1-10 | INV. B32B5/18 B32B27/06 B32B27/08 B32B27/32 B32B1/08 F16L59/14 F24D10/00 |
| X | WO 01/94112 A1 (WAVIN BV [NL]; STOFFELSMA JAN UILKE [NL]; KOESTRING VOLKER [DE]; GUETT) 13. Dezember 2001 (2001-12-13) * Seite 1, letzter Absatz - Seite 2, Absatz 1; Ansprüche 1,6,7 * ----- | 1-3,6,7, 10 | F16L59/10 F16L59/153 |
| X | DE 10 2004 059677 A1 (HRASCHAN JAKOB [AT]) 15. September 2005 (2005-09-15) * Absätze [0001], [0004] - [0012], [0015], [0017]; Ansprüche 1,3 * ----- | 1,2,4-10 | |
| X | EP 1 840 444 A1 (BRUGG ROHR AG HOLDING [CH]) 3. Oktober 2007 (2007-10-03) * Absätze [0001] - [0009], [0014], [0016], [0017]; Ansprüche 1,3-5; Abbildung 1 * ----- | 1,2,4,7, 8,10 | **RECHERCHIERTE SACHGEBIETE (IPC)** B32B F16L F24D |
| X | US 2011/256333 A1 (LUTZ WILLIAM G [US] ET AL) 20. Oktober 2011 (2011-10-20) * Absätze [0058], [0061], [0062] * ----- | 1,3,6,7, 10 | |
| X | WO 01/94092 A1 (THERMAFLEX INTERNAT HOLDING B [NL]; VEN EMANUEL JOSEPH HERMAN MARI [NL] 13. Dezember 2001 (2001-12-13) * Seite 4, Zeile 11 - Zeile 18; Anspruch 8; Beispiel 1 * * Seite 5, Zeile 7 - Zeile 19 * ----- -/-- | 1,2,7,10 | |

Der vorliegende Recherchenbericht wurde für alle Patentansprüche erstellt

| Recherchenort | Abschlußdatum der Recherche | Prüfer |
|---|---|---|
| München | 31. Mai 2013 | Kanetakis, Ioannis |

EPO FORM 1503 03.82 (P04C03)

Europäisches
Patentamt

European
Patent Office

Office européen
des brevets

**EUROPÄISCHER RECHERCHENBERICHT**

**Nummer der Anmeldung**

EP 13 15 6773

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/020821 A1 (DOW GLOBAL TECHNOLOGIES INC [US]; SCHRAMM DETLEF [CH]; QUACK WOLFGANG) 13. März 2003 (2003-03-13) <br> * Seite 2, Zeile 1 - Zeile 3; Ansprüche 7-10,1 * <br> * Seite 12, Zeile 31 - Seite 14, Zeile 14 * <br> * Seite 1, Zeile 28 - Seite 2, Zeile 24 * <br> ----- | 1,2,4-10 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 31. Mai 2013 | Kanetakis, Ioannis |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes
Dokument

EPO FORM 1503 03.82 (P04C03)

**EP 2 636 520 A1**

**ANHANG ZUM EUROPÄISCHEN RECHERCHENBERICHT**
**ÜBER DIE EUROPÄISCHE PATENTANMELDUNG NR.**

EP 13 15 6773

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-05-2013

| Im Recherchenbericht angeführtes Patentdokument | Datum der Veröffentlichung | Mitglied(er) der Patentfamilie | Datum der Veröffentlichung |
|---|---|---|---|
| WO 2008116625 A1 | 02-10-2008 | DE 202007004596 U1 | 31-05-2007 |
| | | EP 2137451 A1 | 30-12-2009 |
| | | WO 2008116625 A1 | 02-10-2008 |
| WO 0194112 A1 | 13-12-2001 | AT 255008 T | 15-12-2003 |
| | | AU 7239701 A | 17-12-2001 |
| | | AU 2001272397 B2 | 21-04-2005 |
| | | BR 0111404 A | 03-06-2003 |
| | | CA 2411679 A1 | 06-12-2002 |
| | | CN 1434768 A | 06-08-2003 |
| | | DE 20010111 U1 | 31-10-2001 |
| | | DK 1286832 T3 | 16-02-2004 |
| | | EP 1286832 A1 | 05-03-2003 |
| | | JP 4955892 B2 | 20-06-2012 |
| | | JP 2003535718 A | 02-12-2003 |
| | | MX PA02012063 A | 19-08-2004 |
| | | NO 20025726 A | 28-11-2002 |
| | | PL 359219 A1 | 23-08-2004 |
| | | TR 200400160 T4 | 22-03-2004 |
| | | US 2003089413 A1 | 15-05-2003 |
| | | WO 0194112 A1 | 13-12-2001 |
| | | ZA 200209683 A | 12-02-2004 |
| DE 102004059677 A1 | 15-09-2005 | AT 7581 U1 | 25-05-2005 |
| | | DE 102004059677 A1 | 15-09-2005 |
| | | DE 202004021744 U1 | 02-09-2010 |
| EP 1840444 A1 | 03-10-2007 | AT 431519 T | 15-05-2009 |
| | | CN 101046273 A | 03-10-2007 |
| | | DE 102006014235 A1 | 04-10-2007 |
| | | DK 1840444 T3 | 31-08-2009 |
| | | EP 1840444 A1 | 03-10-2007 |
| | | ES 2327072 T3 | 23-10-2009 |
| | | JP 2007261267 A | 11-10-2007 |
| | | KR 20070097346 A | 04-10-2007 |
| | | RU 2355941 C2 | 20-05-2009 |
| | | SI 1840444 T1 | 29-01-2010 |
| | | US 2007227758 A1 | 04-10-2007 |
| US 2011256333 A1 | 20-10-2011 | KEINE | |
| WO 0194092 A1 | 13-12-2001 | AT 311279 T | 15-12-2005 |
| | | AU 5256100 A | 17-12-2001 |
| | | CN 1454136 A | 05-11-2003 |
| | | DE 60024497 D1 | 05-01-2006 |
| | | DE 60024497 T2 | 24-08-2006 |

EPO FORM P0461

Für nähere Einzelheiten zu diesem Anhang : siehe Amtsblatt des Europäischen Patentamts, Nr.12/82

14

**ANHANG ZUM EUROPÄISCHEN RECHERCHENBERICHT
ÜBER DIE EUROPÄISCHE PATENTANMELDUNG NR.**

EP 13 15 6773

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-05-2013

| Im Recherchenbericht angeführtes Patentdokument | Datum der Veröffentlichung | Mitglied(er) der Patentfamilie | Datum der Veröffentlichung |
|---|---|---|---|
| | | DK 1289727 T3 | 10-04-2006 |
| | | EP 1289727 A1 | 12-03-2003 |
| | | ES 2254185 T3 | 16-06-2006 |
| | | JP 4937484 B2 | 23-05-2012 |
| | | JP 2003535211 A | 25-11-2003 |
| | | PL 359342 A1 | 23-08-2004 |
| | | TW I273018 B | 11-02-2007 |
| | | UA 74582 C2 | 17-02-2003 |
| | | US 2008311377 A1 | 18-12-2008 |
| | | WO 0194092 A1 | 13-12-2001 |
| WO 03020821 A1 | 13-03-2003 | AR 037142 A1 | 27-10-2004 |
| | | AT 287924 T | 15-02-2005 |
| | | BR 0212631 A | 24-08-2004 |
| | | CA 2457430 A1 | 13-03-2003 |
| | | CN 1545536 A | 10-11-2004 |
| | | CN 101230161 A | 30-07-2008 |
| | | DE 60202780 D1 | 03-03-2005 |
| | | DE 60202780 T2 | 30-06-2005 |
| | | EP 1425344 A1 | 09-06-2004 |
| | | ES 2232767 T3 | 01-06-2005 |
| | | JP 2005501951 A | 20-01-2005 |
| | | JP 2009062539 A | 26-03-2009 |
| | | KR 20080068916 A | 24-07-2008 |
| | | MX PA04001928 A | 23-07-2004 |
| | | PL 203162 B1 | 31-08-2009 |
| | | US 2004266966 A1 | 30-12-2004 |
| | | US 2007112160 A1 | 17-05-2007 |
| | | WO 03020821 A1 | 13-03-2003 |

EPO FORM P0461

Für nähere Einzelheiten zu diesem Anhang : siehe Amtsblatt des Europäischen Patentamts, Nr.12/82